# EUROPEAN PATENT SPECIFICATION

(11) **EP 1 878 334 B1**
(45) Date of publication and mention of the grant of the patent: **09.06.2010**
(21) Application number: 06117231.8
(22) Date of filing: 14.07.2006
(51) Int. Cl.: A01G 7/00

(54) **Method of producing seaweed**
Methode zur Produktion von Algen
Méthode à la production des algues

(43) Date of publication of application: 16.01.2008
(73) Proprietor: Atomic Energy Council - Institute of Nuclear Energy Research, Taoyuan (TW)
(72) Inventor: Chen, Chia-Chieh c/o Atomic Energy Council, Chiaan Village, Lungtan, Taoyuan 333 (TW); Chen, Yean-Chang Atomic Energy Council, Chiaan Village, Lungtan, Taoyuan 333 (TW); Chen, Kuan-Yin Atomic Energy Council, Chiaan Village, Lungtan, Taoyuan 333 (TW); Liu, Hsueh-Hsuan Atomic Energy Council, Chiaan Village, Lungtan, Taoyuan 333 (TW); Lin, Bin Atomic Energy Council, Chiaan Village, Lungtan, Taoyuan 333 (TW); Lee, Meng-Chou Atomic Energy Council, Chiaan Village, Lungtan, Taoyuan 333 (TW); Kuo, Ming-Chao Atomic Energy Council, Chiaan Village, Lungtan, Taoyuan 333 (TW); Hwang, Wen-Song Atomic Energy Council, Chiaan Village, Lungtan, Taoyuan 333 (TW); Fu, Ying-Kai Atomic Energy Council, Chiaan Village, Lungtan, Taoyuan 333 (TW); Lin, Wuu-Jyh Atomic Energy Council, Chiaan Village, Lungtan, Taoyuan 333 (TW); Shen, Lie-Hang Atomic Energy Council, Chiaan Village, Lungtan, Taoyuan 333 (TW)
(74) Representative: Lang, Christian

(56) References cited:
- NEERAJA S ET AL: "GAMMA-RAY INDUCED STUDIES ON RHIZOCLONIUM-HIEROGLYPHICUM AG. KUETZ" INDIAN BOTANICAL REPORTER, vol. 8, no. 2, 1989, pages 107-111, XP001248237 ISSN: 0254-4091
- WANG SU-JUAN ET AL: "Gamma - rays induction of mutation in conchocelis of Porphyra yezoensis" CHINESE JOURNAL OF OCEANOLOGY AND LIMNOLOGY, vol. 18, no. 1, 2000, pages 47-53, XP009075577 ISSN: 0254-4059
- HAMADA J ET AL: "DIFFERENT CELL INACTIVATION KINETICS OF GAMMA-RAYS AND BORON-10 NEUTRON-CAPTURED BEAMS ON A GREEN ALGA CYLINDROCYSTIS-BREBISSONII" ANNUAL REPORTS OF THE RESEARCH REACTOR INSTITUTE KYOTO UNIVERSITY, vol. 24, 1991, pages 33-41, XP001248233 ISSN: 0454-9244

## Description

### Field of the invention

The present invention relates to a method producing sea lettuce.

### Description of the Related Arts

Biological resources are abundant on earth. Under an estimation, the earth produces about 172.5 billions of biomass per year through photosynthesis. As renewable energy, the energy this biomass contains is about 10 to 20 times of the energy the world energy consumption. Yet, we utilize only 1 to 3 percent of this energy. Hence, the best solution for energy may lie in effectively utilizing biomass energy. Regarding seaweed as a material for biomass energy, seaweed production has to be maintained at a certain amount to make seaweed an alternative energy to oil. But most seaweeds grow along sea shores on the rocks, so that production is limited owing to the natural environment.

### Summary of the invention

The object of the present invention is to improve the production of sea lettuce.

To achieve the above object, the present invention provides the method of claim 1. Advantageous embodiments are laid down in further claims.

### Brief descriptions of the drawings

The present invention will be better understood from the following detailed description of the preferred embodiment according to the present invention, taken in conjunction with the accompanying drawings, in which:
FIG.1 is a view showing a flow chart of an embodiment according to the present invention; and
FIG.2 is a view showing the relationship between the dose of the radioactive rays and the dry weight of the seaweed.

### Description of the embodiment

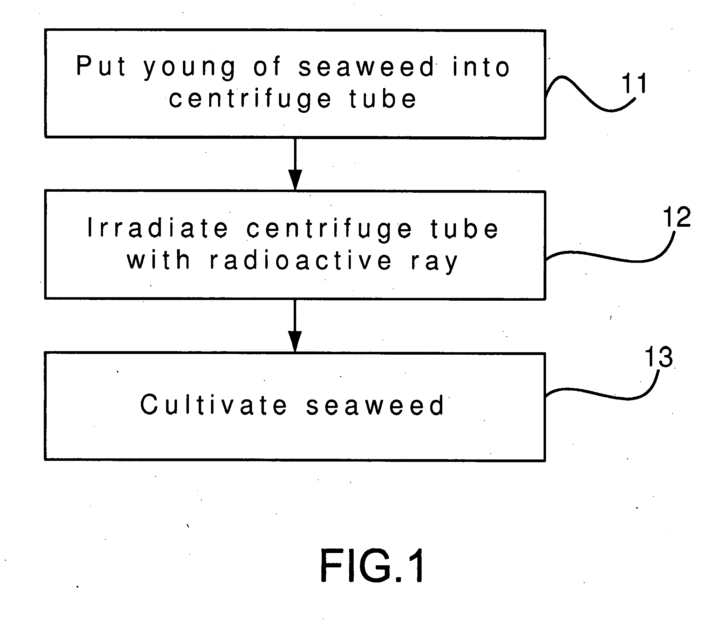

As shown in figure 1, the present invention is related to the production of seaweed by using a method similar to hormesis, i.e. irradiation. The seaweed is irradiated with a radioactive ray for a hormesis to grow fast and improve production. The method comprises the following steps:
(a) Putting at least one young of seaweed into a centrifuge tube (step 11): At least one young of seaweed is put into a centrifuge tube having 40 milliliters (ml) of a seaweed cultivation liquid. Therein, at least one young of seaweed is obtained at first by sprouting a germ cell adhered to a seaweed adherence device on a cotton string, where the young of seaweed has a length between 1 and 1.5mm; and, the cotton string having the young of seaweed is cut to obtain a length between 5 centimeters (cm) and 7cm to be put into a centrifuge tube having 40ml of a seaweed cultivation liquid, where the seaweed cultivation liquid is obtained from a sterilized seawater having a salinity of 3.5 percents (%) and being added with 1ml of a saturated germanium oxide solution per liter.
(b) Irradiating the centrifuge tube with a radioactive ray (step 12): The centrifuge tube having the young of seaweed is irradiated in water by a gamma ray of cobalt-60 (Co⁶⁰) with a dose between 5 gray (Gy) to 100Gy on the young of seaweed.
(c) Cultivating the seaweed (step 13): Then, the young of seaweed are moved from the centrifuge tube to a taper bottle containing the seaweed cultivation liquid; and the taper bottle is put into a plant cultivation cabinet for a cultivation. Therein, the young of seaweed irradiated by the gamma ray are moved to a taper bottle at first; then the taper bottle is put into a plant cultivation cabinet to cultivate the seaweed under an environment of a temperature between 20 Celsius degrees (°C) and 30°C, a luminous intensity between 145 and 155 µ E m⁻² s⁻¹ and a photoperiod of 12/12 (light/dark).

In the above steps, at least one young of seaweed is irradiated by Co⁶⁰ for hormesis to speed up growth of the seaweed and improve a production. Moreover, since the seaweed is a material for biomass energy, the present invention accelerates the growth of the seaweed and improves the production so that material for biomass energy is provided.

Taking sea lettuce as an example, the present invention comprises the following steps:
(a) At least one young of sea lettuce is put into a centrifuge tube having 40ml of a seaweed cultivation liquid, where at least one young of sea lettuce is obtained at first by sprouting germ cells cohered to an adherence device for sea lettuce on a cotton string; and then the cotton string having the young of sea lettuce is cut to obtain 6cm of the cotton string to be put into a centrifuge tube having 40ml of a seaweed cultivation liquid obtained from a sterilized seawater having a salinity of 3.5% and being added with 1 ml of a saturated germanium oxide solution per liter.
(b) The centrifuge tube having the young of sea lettuce is irradiated in water by a gamma ray of Co⁶⁰ with a dose of 15Gy so that the sea lettuce obtains a hormesis through the irradiation.
(c) Then, the young of sea lettuce is moved from the centrifuge tube to a taper bottle containing a seaweed cultivation liquid; and the taper bottle is put into a plant cultivation cabinet to cultivate the sea lettuce under an environment of a temperature of 24°C, a luminous intensity of 150 µ Em⁻² s⁻¹ and a photoperiod of 12/12 (light/dark).

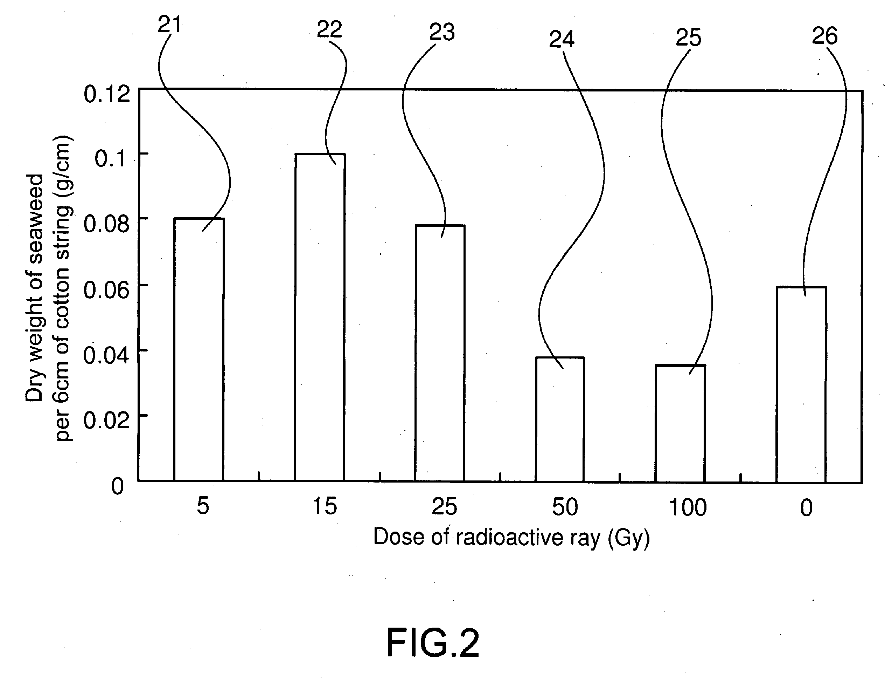

FIG.2 is a view showing the relationship between the dose of irradiation and the dry weight of seaweed. As shown in the figure, at least one young of sea lettuce is obtained to be put into each centrifuge tube. And each centrifuge tube is irradiated by a radioactive ray having a various dose; then the young of sea lettuce is moved from the centrifuge tube to a taper bottle having 6cm of a cotton string; and then the taper bottle is put into a plant cultivation cabinet for a cultivation for a period of time. After the period of time, the cotton string cohered with the sea lettuce is taken out to be dried. After removing the cotton string, a dry weight of the sea lettuce is measured. In the diagram of FIG. 2 a first vertical bar 21 shows the dry weight after a 5Gy irradiation with a radioactive ray wherein a first young of the sea lettuce after the irradiation has a dry weight of 0.08 grams per centimeter (g/cm); a second vertical bar 22 obtained after a 15Gy of irradiation and a second young of the sea lettuce a dry weight of 0.1g/cm; a third vertical bar 23 after a 25Gy of irradiation and a third young of the sea lettuce a dry weight of 0.078g/cm; a fourth vertical bar 24 after a 50Gy of irradiation and a fourth young of the sea lettuce a dry weight of 0.038g/cm; a fifth vertical bar 25 after a 100Gy of irradiation and a fifth young of the sea lettuce a dry weight of 0.035g/cm; and a sixth vertical bar 25 with no irradiation and a sixth young of the sea lettuce a dry weight of 0.06g/cm. According to the above results, after growing through an irradiation of the radioactive ray with a dose between 5Gy to 25Gy, the youngs of sea lettuce obtained have dry weights greater than the young of sea lettuce growing through no irradiation. And, the young of sea lettuce growing through the irradiation with a dose of 15Gy has the heaviest weight.

To sum up, the present invention is a method of hormesis for sea lettuce through irradiation, where irradiated sea lettuce obtains a hormesis for rapid growth so that production is improved and a material for biomass energy is provided.

## Claims

1. A method of producing sea lettuce, comprising steps of:
(a) obtaining at least one young of sea lettuce of a length between and 1.5 mm by sprouting a germ cell and putting it into a centrifuge tube containing a seaweed cultivation liquid;
(b) irradiating said centrifuge tube with gamma rays to provide a dose from 5 Gy to 25 Gy to said at least one young of sea lettuce;
(c) transfering said at least one young of sea lettuce from said centrifuge tube to a taper bottle containing a seaweed cultivation liquid and then locating said taper bottle in a plant cultivation cabinet to cultivate said seaweed.

2. The method according to claim 1, wherein said seaweed cultivation liquid is obtained from a seawater; wherein said seawater has a salinity of 3.5%; and wherein 1 milliliter (ml) of saturated germanium oxide solution is added into said seawater per liter.

3. The method according to claim 1 to 2, wherein said centrifuge tube has a volume of 50ml; and wherein said centrifuge tube contains 40ml of said seaweed cultivation liquid.

4. The method according to one of claims I to 3, wherein said cultivation has an environment of a temperature between 20°C and 30°C, a luminous intensity between 145 µ Em-2s-1 and 155 µ Em-2s-1 and a photoperiod of 12/12 (light / dark).

## Patentansprüche

1. Verfahren zum Herstellen von Meersalat, umfassend folgende Schritte:
(a) Gewinnen von wenigstens einem jungen Meersalat mit einer Länge zwischen 1 und 1,5 mm durch Aufkeimen einer Keimzelle und Einbringen von dieser in eine Zentrifugenröhre, die eine Seetang- Kultivierungsflüssigkeit aufweist;
(b) Bestrahlen der Zentrifugenröhre mit Gamma- Strahlen, um eine Dosis von 5 Gy bis 25 Gy auf den wenigstens einen jungen Meeressalat bereit zu stellen;
(c) Transferieren des wenigstens einen jungen Meeressalats von der Zentrifugenröhre zu eine sich verjüngende Flasche, die eine Seetang- Kultivierungsflüssigkeit aufweist und anschließendes Anordnen der sich verjüngenden Flasche in einer Pflanzenkultivierungskabine, um den Seetang zu kultivieren.

2. Verfahren nach Anspruch 1,
**dadurch gekennzeichnet, dass**
die Seetang- Kultivierungsflüssigkeit aus Meerwasser gewonnen wird;
das Seewasser einen Salzgehalt von 3,5% aufweist; und
1 Milliliter (ml) gesättigte Germaniumoxid-Lösung pro Liter in das Meerwasser hinzugefügt wird.

3. Verfahren nach einem der Ansprüche 1 bis 2,
**dadurch gekennzeichnet, dass**
die Zentrifugenröhre ein Volumen von 50 ml aufweist; und
die Zentrifugenröhre 40 ml der Seetang- Kultivierungsflüssigkeit aufweist.

4. Verfahren nach einem der Ansprüche 1 bis 3,
**dadurch gekennzeichnet, dass**
die Kultivierung eine Umgebung aufweist, deren Temperatur zwischen 20°C und 30°C, deren Lichtstärke zwischen 145 µEm-2s-1 und 155 µEM-2s-1 ist und deren Lichtperiode 12/12 (hell/dunkel) ist.

## Revendications

1. Procédé de production de laitue de mer, comprenant les étapes consistant à :
(a) obtenir au moins une jeune pousse de laitue de mer d'une longueur comprise entre 1 et 1,5 mm en faisant germer une cellule germinale et en la plaçant dans un tube centrifuge contenant un liquide de culture de plante aquatique ;
(b) irradier ledit tube centrifuge avec des rayons gamma en apportant une dose allant de 5 Gy à 25 Gy à ladite au moins une jeune pousse de laitue de mer ;
(c) transférer ladite au moins une jeune pousse de laitue de mer dudit tube centrifuge à la bouteille conique contenant un liquide de culture de plante aquatique puis positionner ladite bouteille conique dans une armoire de culture de plantes pour cultiver ladite plante aquatique.

2. Procédé selon la revendication 1, dans lequel ledit liquide de culture de plante aquatique est obtenu à partir d'eau de mer ; dans lequel ladite eau de mer a une salinité de 3,5 % ; et dans lequel 1 millimètre (ml) de solution saturée d'oxyde de germanium est ajouté à chaque litre d'eau de mer.

3. Procédé selon l'une quelconque des revendications 1 à 2, dans lequel ledit tube centrifuge présente un volume de 50 ml ; et dans lequel ledit tube centrifuge contient 40 ml dudit liquide de culture de plante aquatique.

4. Procédé selon l'une quelconque des revendications 1 à 3, dans lequel ladite culture a un environnement présentant une température comprise entre 20 °C et 30 °C, une intensité lumineuse comprise entre 145 µEm-2s-1 et 155 µEm-2s-1 et une photopériode de 12/12 (jour / nuit).
